# EUROPÄISCHE PATENTSCHRIFT

(11) **EP 1 805 403 B1**
(45) Veröffentlichungstag und Bekanntmachung des Hinweises auf die Patenterteilung: **14.05.2008**
(21) Anmeldenummer: 05792666.9
(22) Anmeldetag: 15.10.2005
(51) Int. Cl.: F02D 41/02, F01N 3/20, F02D 41/00, F02B 37/24, F02D 9/06, F01N 11/00, F02D 13/04

(54) **VERFAHREN ZUM BETRIEB EINER BRENNKRAFTMASCHINE IM MOTORBREMSBETRIEB**
METHOD FOR OPERATING AN INTERNAL COMBUSTION ENGINE DURING ENGINE-BRAKING
PROCEDE D'EXPLOITATION D'UN MOTEUR A COMBUSTION INTERNE EN MODE DE FREINAGE PAR FREIN MOTEUR

(30) Priorität: 29.10.2004 DE 102004052670
(43) Veröffentlichungstag der Anmeldung: 11.07.2007
(73) Patentinhaber: Daimler AG, 70327 Stuttgart (DE)
(72) Erfinder: BENZ, Michael, 73760 Ostfildern (DE); KRÄTSCHMER, Stephan, 73527 Schwäbisch Gmünd (DE); ROHRER, Thomas, 76448 Durmersheim (DE)
(86) Internationale Anmeldenummer: PCT/EP2005/011120
(87) Internationale Veröffentlichungsnummer: WO 2006/048107

(56) Entgegenhaltungen:
- EP-A- 1 275 833
- EP-A- 1 344 906
- WO-A-20/04042206

## Beschreibung

Die Erfindung bezieht sich auf ein Verfahren zum Betrieb einer Brennkraftmaschine im Motorbremsbetrieb nach dem Oberbegriff des Anspruches 1.

In der Druckschrift DE 195 43 190 C2 wird ein Motorbremsverfahren für eine aufgeladene Brennkraftmaschine beschrieben, die mit einem Abgasturbolader ausgestattet ist, deren im Abgasstrang angeordnete Abgasturbine mit variabler Turbinengeometrie zur veränderlichen Einstellung des wirksamen Turbineneintrittsquerschnittes versehen ist. Im Motorbremsbetrieb nimmt die variable Turbinengeometrie eine den Strömungsquerschnitt reduzierende Stauposition ein, wodurch der Abgasgegendruck im Leitungsabschnitt zwischen Zylinderausgang und Abgasturbine erhöht wird. Das Abgas strömt mit hoher Geschwindigkeit durch die verbleibenden Strömungskanäle zwischen den Leitschaufeln der variablen Turbinengeometrie und beaufschlagt das Turbinenrad, woraufhin auch der Verdichter im Ansaugtrakt angetrieben wird und einen Überdruck aufbaut. Eingangsseitig werden somit die Zylinder der Brennkraftmaschine mit erhöhtem Ladedruck beaufschlagt, ausgangsseitig liegt zwischen den Zylinderauslässen und der Abgasturbine ein Überdruck an, der dem Abblasen der in den Zylindern verdichteten Luft über Drosselventile in den Abgasstrang hinein entgegenwirkt. Im Motorbremsbetrieb müssen daher die Kolben der Brennkraftmaschine im Verdichtungshub Kompressionsarbeit gegen den hohen Überdruck im Abgasstrang verrichten, wodurch hohe Bremsleistungen erzeugt werden können.

Stromab der Abgasturbine befindet sich üblicherweise im Abgasstrang ein Katalysator zur Reinigung der Abgase vor dem Austritt in die Atmosphäre. Jedoch kann im Motorbremsbetrieb aufgrund des hohen Abgasgegendruckes die Temperatur im Abgasstrang so weit ansteigen, dass eine Schädigung des Katalysators zu befürchten ist. In der Druckschrift EP 1 275 833 A wird ein weiteres Motorbremsverfahren beschrieben.

Um derartige Schädigungen zu vermeiden, wird bei einer in der Druckschrift JP 2002188491 beschriebenen Brennkraftmaschine intermittierend Kraftstoff eingespritzt, wodurch eine oxidationsfördernde Atmosphäre im Abgasstrang erzeugt wird, die eine Überhitzung des Katalysators vermeiden hilft. Allerdings hat die Kraftstoffeinspritzung Auswirkung auf die Bremsleistung, was zu einer unerwünschten Bremsleistungsänderung führt. Je nach Einspritzzeitpunkt kann dies zu einer Bremsleistungserhöhung oder auch -verringerung führen.

Der Erfindung liegt das Problem zugrund, mit einfach durchzuführenden Maßnahmen im Motorbremsbetrieb einer Brennkraftmaschine eine Überhitzung einer Abgasreinigungseinrichtung im Abgasstrang zu vermeiden. Hierbei soll zweckmäßig die Motorbremsleistung zumindest annähernd konstant gehalten werden.

Dieses Problem wird erfindungsgemäß mit den Merkmalen des Anspruches 1 gelöst. Die Unteransprüche geben zweckmäßige Weiterbildungen an.

Bei dem erfindungsgemäßen Verfahren zum Betrieb einer Brennkraftmaschine im Motorbremsbetrieb ist stromauf der Abgasreinigungseinrichtung im Abgasstrang ein einstellbares Querschnittsstellglied vorgesehen, außerdem ist mindestens einem der Zylinder der Brennkraftmaschine ein Drosselventil zugeordnet, welches im Motorbremsbetrieb in eine Öffnungsposition verstellt wird, woraufhin im Verdichtungshub der Kolben der Zylinderinhalt unmittelbar in den Abgasstrang abgeblasen wird. Zugleich wird das Querschnittsstellglied in eine den freien Querschnitt reduzierende Stauposition überführt, woraufhin sich im Abgasstrang ein erhöhtes Druckniveau einstellt, gegen das im Verdichtungshub der Brennkraftmaschine Kompressionsarbeit geleistet werden muss.

Für den Fall, dass eine mit der Abgastemperatur korrelierende Kenngröße einen gegebenen Grenzwert übersteigt, wird das Querschnittsstellglied kurzzeitig in Öffnungsposition und anschließend wieder in die den Querschnitt reduzierende Stauposition verstellt. Das kurzzeitige Öffnen des Querschnittsstellgliedes bewirkt einen Abbau des hohen Abgasgegendruckes, wodurch auch die Temperatur im Abgasstrang reduziert wird. Die Temperatur in der Abgasreinigungseinrichtung kann daraufhin wieder unter einen unkritischen Grenzwert absinken. Kurzzeitiges Öffnen des Querschnittsstellglieds ist in der Weise zu verstehen, dass während des Motorbremsbetriebs das Querschnittsstellglied grundsätzlich in Stauposition steht und nur solange geöffnet wird, bis eine Kenngröße einen vorgegebenen Wert über- oder unterschreitet, beispielsweise eine definierte Zeitspanne abgelaufen ist oder die Fahrzeuggeschwindigkeit um einen bestimmten Betrag zugenommen hat oder eine Temperatur-Kenngröße einen bestimmten Schwellenwert überschritten hat.

Da das Querschnittsstellglied nur für einen kurzen Zeitraum geöffnet wird, ist der Einfluss auf die Motorbremsleistung gering. Es ist nur eine geringe Schwankung der Motorbremsleistung zu erwarten, insbesondere ein kurzzeitiges Abfallen der Motorbremsleistung, wobei die Schwankungsbreite nur gering ist, da aufgrund des lediglich kurzen Zeitraumes, über den das Querschnittsstellglied geöffnet wird, auch der Druckabfall sich in Grenzen hält bzw. der Druck schnell wieder aufgebaut werden kann. Diese ist vor allem durch die beim Öffnen des Querschnittsstellglieds plötzlich zunehmende Bewegung der Luftmasse im Motor bzw. Abgastrakt begünstigt. Durch das sofortige Schließen des Querschnittsstellgliedes wird diese Luftmasse wiederum abgebremst und die in dem Gas enthaltene kinetische Energie in Druckenergie umgewandelt.

Als Kenngröße, welche mit der Abgastemperatur korreliert und für die Entscheidung herangezogen wird, ob das Querschnittsstellglied kurzzeitig geöffnet werden soll, wird insbesondere die Katalysator-Eingangstemperatur berücksichtigt. Darüber hinaus kommen als mit der Abgastemperatur korrelierende Kenngröße auch sonstige Zustands- bzw. Betriebsgrößen in der Brennkraftmaschine bzw. in einem der Brennkraftmaschinen zugeordneten Aggregate in Betracht, insbesondere die Abgastemperatur im Leitungsabschnitt zwischen Zylinderausgang und Querschnittsstellglied oder auch sonstige Temperaturgrößen. Gegebenenfalls kommen auch Nicht-Temperaturgrößen in Betracht, beispielsweise der Abgasgegendruck.

Die Zeitdauer, für die das Querschnittsstellglied in geöffneter Position steht, kann von verschiedenen Einflussgrößen abhängig gemacht werden. Zum einen kann eine Mindestzeitspanne vorgegeben werden, für die das Querschnittsstellglied geöffnet bleibt und nach deren Ablauf das Querschnittsstellglied wieder in die Stauposition überführt wird. Zum anderen können auch zusätzlich zu berücksichtigende Bedingungen eingeführt werden, welche nach dem Ablauf der Mindestzeitspanne jeweils für sich genommen oder auch kumulativ erfüllt sein müssen, damit das Querschnittsstellglied wieder in die Stauposition verstellt wird. Hierzu zählen beispielsweise der Ablauf einer maximalen Zeitspanne, die Zunahme der Fahrzeuggeschwindigkeit um einen vorgegebenen Wert oder das Absinken der Katalysator-Eingangstemperatur unter einen Schwellenwert.

Während des kurzzeitigen Öffnens des Querschnittsstellgliedes bleibt das Drosselventil zweckmäßig in seiner Öffnungsposition stehen, so dass auch während der Öffnungsperiode des Querschnittsstellglieds Motorbremsleistung produziert wird.

Als Querschnittsstellglied kommt zum einen eine Motorbremsklappe in Betracht, welche stromauf der Abgasreinigungseinrichtung im Abgasstrang angeordnet ist. Zum anderen kann aber auch eine variable Turbinengeometrie in einer Abgasturbine, welche Teil eines Abgasturboladers ist, als Querschnittsstellglied eingesetzt werden, wobei über die variable Turbinengeometrie der wirksame Turbineneintrittsquerschnitt in der Abgasturbine einzustellen ist. In der Stauposition der variablen Turbinengeometrie wird der Abgasgegendruck aufgrund des reduzierten Strömungsquerschnittes erhöht, in der Öffnungsposition wieder abgebaut. Auch in Stauposition der variablen Turbinengeometrie kann über den verbleibenden freien Strömungsquerschnitt das Gas im Abgasstrang auf das Turbinenrad auftreffen, wodurch diesem ein antreibender Impuls versetzt wird und auch das Verdichterrad angetrieben wird. Hierdurch wird ein insgesamt hohes Druckniveau sowohl im Ansaugtrakt als auch im Abgasstrang erreicht, wodurch das Bremsleistungsniveau erhöht wird. Zur Erhöhung der Motorbremsleistung, beispielsweise für den Fall einer Notbremsung, kann die variable Turbinengeometrie in Staustellung überführt, das Drosselventil maximal geöffnet und zugleich vor Erreichen des oberen Totpunktes eine maximal mögliche Kraftstoffmenge in die Brennräume eingespritzt und verbrannt werden, woraufhin im Brennraum ein Druck aufgebaut wird, gegen den der sich nach oben bewegende Kolben Arbeit verrichten muss.

Gegebenenfalls kommt auch eine Kombination von variabler Turbinengeometrie und Motorbremsklappe stromab der Abgasturbine in Betracht, wodurch eine zusätzliche Einstellmöglichkeit gegeben ist.

Dem Fahrer wird in vorteilhafter Ausführung das kurzzeitige Öffnen des Querschnittsstellglieds angezeigt, um ihn darüber zu informieren, dass Maßnahmen zur Reduzierung der Katalysatortemperatur ergriffen worden sind.

Weitere Vorteile und zweckmäßige Ausführungen sind den weiteren Ansprüchen, der Figurenbeschreibung und den Zeichnungen zu entnehmen. Es zeigen:
- Fig. 1: eine schematische Darstellung einer Brennkraftmaschine mit Abgasturbolader und Motorbremsklappe stromab der Abgasturbine und stromauf eines Katalysators im Abgasstrang,
- Fig. 2: ein Ablaufdiagramm mit einzelnen Verfahrensschritten zum Betrieb der Brennkraftmaschine im Motorbremsbetrieb.

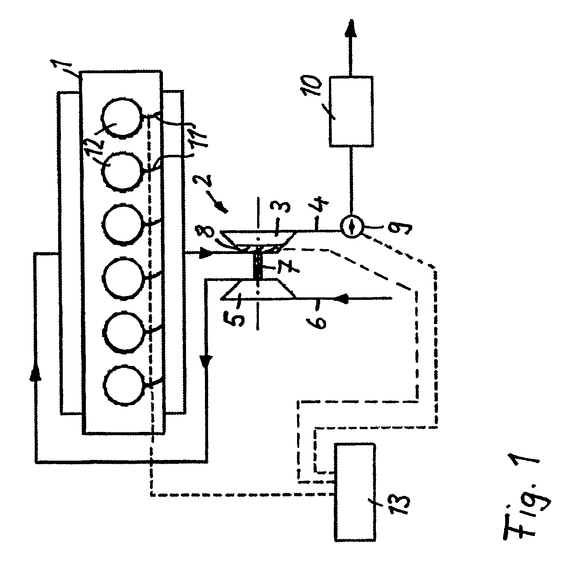

Bei der in Fig. 1 dargestellten Brennkraftmaschine 1 handelt es sich um einen Dieselmotor, welcher insbesondere in schweren Nutzfahrzeugen eingesetzt wird. Im Rahmen der Erfindung kommt aber auch eine Anwendung in einem Otto-Motor in Betracht.

Der Brennkraftmaschine 1 ist ein Abgasturbolader 2 zugeordnet, welcher eine Abgasturbine 3 im Abgasstrang 4 und einen Verdichter 5 im Ansaugtrakt 6 umfasst, wobei das Turbinenrad über eine Welle 7 mit dem Verdichterrad drehfest verbunden ist. Die Abgasturbine 3 ist mit einer variablen Turbinengeometrie 8 zur veränderlichen Einstellung des wirksamen Turbineneintrittsquerschnittes ausgestattet. Bei der variablen Turbinengeometrie handelt es sich beispielsweise um ein im Turbineneintrittsquerschnitt angeordnetes Leitgitter mit verstellbaren Leitschaufeln oder um ein Leitgitter mit feststehenden Leitschaufeln, welches axial in den Turbineneintrittsquerschnitt einschiebbar ist. Die variable Turbinengeometrie 8 ist zwischen einer den Querschnitt minimierenden, jedoch nicht vollständig verschließenden Stauposition und einer den Querschnitt maximal freigebenden Öffnungsposition zu verstellen.

Es kann gegebenenfalls auch zweckmäßig sein, eine Abgasturbine mit Festgeometrie einzusetzen, bei der keine Verstellmöglichkeit zur Einstellung des wirksamen Turbineneintrittsquerschnitts gegeben ist, und die Regulierung des Strömungsquerschnitts im Abgasstrang ausschließlich über die Motorbremsklappe vorzunehmen.

Stromab der Abgasturbine 3 ist im Abgasstrang 4 eine Motorbremsklappe 9 angeordnet, die ebenfalls zwischen einer den Strömungsquerschnitt im Abgasstrang minimierenden Stauposition und einer den Strömungsquerschnitt maximal freigebenden Öffnungsposition zu verstellen ist. Darüber hinaus befindet sich im Abgasstrang 4 stromab der Motorbremsklappe 9 eine Abgasreinigungseinrichtung 10, insbesondere ein Katalysator.

Jedem Zylinder 12 der Brennkraftmaschine 1 ist jeweils ein Drosselventil 11 zugeordnet, welches im Motorbremsbetrieb in Öffnungsposition verstellt wird, woraufhin der Zylinderinhalt unmittelbar über das geöffnete Drosselventil in den Abgasstrang 4 entweichen kann. Der Hub und die Öffnungsdauer der Drosselventile 11 sind zweckmäßig einstellbar.

Darüber hinaus ist der Brennkraftmaschine 1 eine Regel- und Steuereinheit 13 zugeordnet, über die die einstellbaren Aggregate der Brennkraftmaschine, insbesondere die variable Turbinengeometrie 8, die Motorbremsklappe 9 sowie die Drosselventile 11 in Abhängigkeit von Zustands- und Betriebsgrößen der Brennkraftmaschine einzustellen sind_

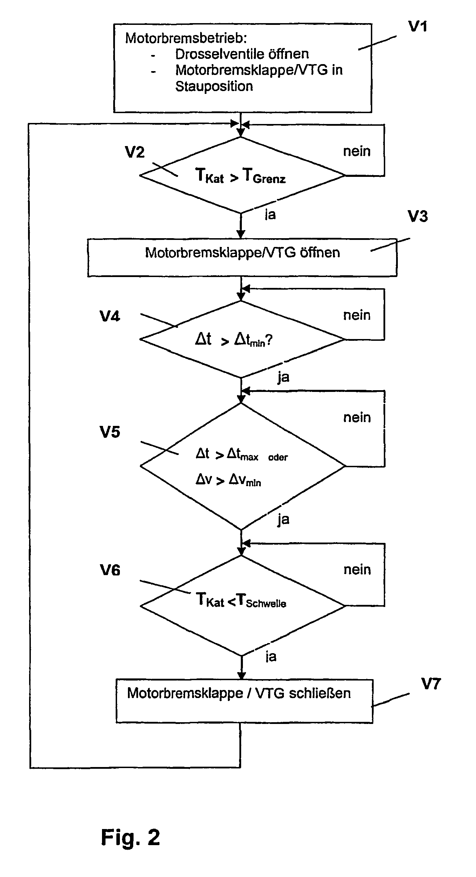

In Fig. 2 ist ein Ablaufdiagramm mit den einzelnen Verfahrensschritten zur Regulierung der Katalysatortemperatur im Motorbremsbetrieb dargestellt. Zur Auslösung des Motorbremsbetriebes werden gemäß Verfahrensschritt V1 die Drosselventile geöffnet und wird die Motorbremsklappe in die Stauposition versetzt. Zugleich wird auch die variable Turbinengeometrie (VTG) in Stauposition überführt, woraufhin ein hoher Druck im Leitungsabschnitt zwischen den Ausgängen der Zylinder der Brennkraftmaschine und dem Eingang in der Abgasturbine erzeugt wird und das Gas im Leitungsabschnitt durch die verbleibenden, freien Strömungsquerschnitte in der variablen Turbinengeometrie mit hoher Geschwindigkeit auf das Turbinenrad auftrifft. Die Rotation des Turbinenrades wird über die Welle auf das Verdichterrad übertragen, der daraufhin Verbrennungsluft ansaugt und auf erhöhten Ladedruck verdichtet. Auf diese Weise wird sowohl im Ansaugtrakt als auch im Abgasstrang ein erhöhtes Druckniveau eingestellt.

Über die Motorbremsklappe erhält man eine zusätzliche Einstellmöglichkeit, wodurch beispielsweise ein Motorbremsbetrieb realisiert werden kann, in welchem die variable Turbinengeometrie geöffnet ist oder in einer Zwischenposition zwischen Öffnungs- und Stauposition steht und zugleich die Motorbremsklappe geschlossen ist. In dieser Betriebsweise wird aufgrund des geringeren Druckabfalles über der Abgasturbine weniger Turbinenleistung und damit auch ein geringeres Druckniveau auf der Ansaugseite und auf der Abgasseite erzeugt.

Andererseits ist auch ein Motorbremsbetrieb vorstellbar, bei dem die Motorbremsklappe geöffnet und die variable Turbinengeometrie in Stauposition verstellt ist. Aufgrund des hohen Druckabfalls über der Abgasturbine wird auch hohe Laderleistung generiert mit einem entsprechenden Anstieg des Druckniveaus sowohl auf der Ansaugseite als auch auf der Abgasseite.

Um sicherzustellen, dass die Katalysatortemperatur T_{Kat} keine schädlichen Temperaturbereiche erreicht, wird gemäß Verfahrensschritt V2 abgeprüft, ob die Katalysatortemperatur T_{Kat} bereits einen Grenzwert T_{Grenz} erreicht hat, welcher zweckmäßig unterhalb einer den Katalysator schädigenden Temperatur liegt. Sofern die Katalysatortemperatur diesen Grenzwert T_{Grenz} noch nicht erreicht hat, wird der Nein-Verzweigung des Verfahrensschrittes V2 entsprechend wieder zu Beginn der Abfrage zurückgekehrt und die Abfrage in zyklischen Abständen wiederholt. Für den Fall, dass die Katalysatortemperatur T_{Kat} den gegebenen Grenzwert T_{Grenz} überschritten hat, wird der Ja-Verzweigung entsprechend zum folgenden Verfahrensschritt V3 fortgefahren.

Gemäß Verfahrensschritt V3 wird die Motorbremsklappe und/oder die variable Turbinengeometrie geöffnet, wodurch der Abgasgegendruck abgebaut und damit auch die Temperatur im Abgasstrang reduziert wird.

Die Öffnungsposition von Motorbremsklappe/variabler Turbinengeometrie wird für einen Mindestzeitraum Δtₘᵢₙ aufrechterhalten. Falls die Abfrage in Verfahrensschritt V4 ergibt, dass dieser Zeitraum Δtₘᵢₙ noch nicht abgelaufen ist, wird der Nein-Verzweigung entsprechend die Abfrage in zyklischen Abständen wiederholt. Falls die Abfrage in V4 ergibt, dass der Zeitraum Δt, über den die Motorbremsklappe bzw. die variable Turbinengeometrie offen gehalten wird, bereits den Mindestzeitraum Δtₘᵢₙ erreicht hat, wird der Ja-Verzweigung entsprechend zum nächsten Abfrageblock V5 fortgefahren.

Im Verfahrensschritt V5 wird zyklisch abgefragt, ob die Zeitdauer Δt, über die das Querschnittsstellglied geöffnet bleibt, eine maximale Zeitspanne Δtₘₐₓ überschritten hat. Sofern dies der Fall ist, wird entsprechend der Ja-Verzweigung fortgefahren. Zusätzlich wird in V5 abgefragt, ob die Zunahme der Fahrzeuggeschwindigkeit Δv größer ist als ein vorgegebener Wert ΔVₘᵢₙ. Sofern dies zutrifft, wird ebenfalls der Ja-Verzweigung gemäß fortgefahren. Hierdurch ergibt sich die Situation, dass zum nächsten Verfahrensschritt V6 übergegangen wird, sofern nur eine der abgefragten Bedingungen aus dem Verfahrensschritt V5 zutrifft, die demzufolge nur alternativ erfüllt sein müssen. Sind dagegen beide Bedingungen nicht erfüllt, wird der Nein-Verzweigung entsprechend in zyklischen Abständen die Abfrage wiederholt.

Im Verfahrensblock V6 wird eine weitere Abfrage durchgeführt. Gemäß V6 wird überprüft, ob die Katalysator-Eingangstemperatur T_{Kat} einen gegebenen Schwellenwert T_{Schwelle} unterschreitet. Dieser Schwellenwert kann zwar mit dem Temperaturgrenzwert T_{Grenz} übereinstimmen, kann hiervon gegebenenfalls aber auch abweichen, insbesondere niedriger liegen als der Grenzwert T_{Grenz}, bei dessen Überschreitung das Querschnittsstellglied in Öffnungsposition versetzt wird. Sofern die Abfrage im Verfahrensblock V6 zutrifft, also die Katalysatoreingangstemperatur T_{Kat} unterhalb des gegebenen Schwellenwertes T_{Schwelle} angefallen ist, wird der Ja-Verzweigung entsprechend zum nächsten Verfahrensschritt V7 fortgefahren; andernfalls wird die Abfrage nach V6 in zyklischen Abständen wiederholt.

Die Regulierung der Katalysatortemperatur ist nunmehr beendet und es kann gemäß V7 zum regulären Motorbremsbetrieb zurückgekehrt werden, in dem die Motorbremsklappe und/oder die variable Turbinengeometrie VTG eine den aktuellen Lastanforderungen entsprechende Schließposition einnehmen. Anschließend erfolgt ein Rücksprung zum Verfahrensschritt V2, um in zyklischen Wiederholungen ein erneutes Ansteigen der Katalysatortemperatur zu überprüfen.

Die Beendigung des Motorbremsbetriebs erfolgt auf Wunsch des Fahrers durch eine entsprechende Fahrerbetätigung.

## Patentansprüche

1. Verfahren zum Betrieb einer Brennkraftmaschine im Motorbremsbetrieb, mit einer Abgasreinigungseinrichtung (10) im Abgasstrang (4) der Brennkraftmaschine (1) und einem einstellbaren Querschnittsstellglied (8, 9) im Abgasstrang (4) stromauf der Abgasreinigungseinrichtung (10) zur Regulierung des Strömungsquerschnitts im Abgasstrang (4), und mit mindestens einem einem Zylinder (12) der Brennkraftmaschine (1) zugeordneten Drosselventil (11), wobei im Motorbremsbetrieb das Drosselventil (11) geöffnet und das Querschnittsstellglied (8, 9) in eine den Strömungsquerschnitt reduzierende Stauposition überführt wird,
**dadurch gekennzeichnet,**
**dass** für den Fall, dass eine mit der Abgastemperatur korrelierende Kenngröße (T_{Kat}) einen Grenzwert (T_{Grenz}) übersteigt, das Querschnittsstellglied (8, 9) kurzzeitig geöffnet und anschließend wieder in die Stauposition verstellt wird.

2. Verfahren nach Anspruch 1,
**dadurch gekennzeichnet,**
**dass** als Kenngröße die Katalysator-Eingangstemperatur (T_{Kat}) berücksichtigt wird.

3. Verfahren nach Anspruch 1 oder 2,
**dadurch gekennzeichnet,**
**dass** das Querschnittsstellglied (8, 9) nach dem Absinken der Kenngröße (T_{Kat}) unter einen Schwellenwert (T_{Schwelle}) wieder in die Stauposition verstellt wird.

4. Verfahren nach einem der Ansprüche 1 bis 3,
**dadurch gekennzeichnet,**
**dass** das Querschnittsstellglied (8, 9) für eine Mindestzeitspanne (Δtₘᵢₙ) geöffnet bleibt.

5. Verfahren nach einem der Ansprüche 1 bis 4,
**dadurch gekennzeichnet,**
**dass** das Querschnittsstellglied (8, 9) nach Ablauf einer vorgegeben Zeitspanne (Δtₘₐₓ) wieder in die Stauposition verstellt wird.

6. Verfahren nach einem der Ansprüche 1 bis 5,
**dadurch gekennzeichnet,**
**dass** das Querschnittsstellglied (8, 9) so lange geöffnet bleibt, bis die Fahrzeuggeschwindigkeit um einen vorgegebenen Wert (Δvₘᵢₙ) zugenommen hat.

7. Verfahren nach einem der Ansprüche 1 bis 6,
**dadurch gekennzeichnet,**
**dass** das Drosselventil (11) während des kurzzeitigen Öffnens des Querschnittsstellglieds (8, 9) geöffnet bleibt.

8. Verfahren nach einem der Ansprüche 1 bis 7,
**dadurch gekennzeichnet,**
**dass** das Querschnittsstellglied eine Motorbremsklappe (9) ist.

9. Verfahren nach einem der Ansprüche 1 bis 8,
**dadurch gekennzeichnet,**
**dass** ein Abgasturbolader (2) mit einer Abgasturbine (3) im Abgasstrang (4) und einem Verdichter (5) im Ansaugtrakt (6) vorgesehen ist.

10. Verfahren nach Anspruch 9,
**dadurch gekennzeichnet,**
**dass** das Querschnittsstellglied eine variable Turbinengeometrie (8) zur veränderlichen Einstellung des wirksamen Turbineneintrittsquerschnitts in der Abgasturbine (3) ist, wobei im Motorbremsbetrieb die variable Turbinengeometrie (8) in eine querschnittsreduzierende Staustellung überführt wird.

11. Verfahren nach einem der Ansprüche 1 bis 10,
**dadurch gekennzeichnet,**
**dass** dem Fahrer das kurzzeitige Öffnen des Querschnittsstellglieds angezeigt wird.

## Claims

1. A process for operating an internal combustion engine during engine-braking having an exhaust emission control device (10) in the exhaust system (4) of the internal combustion engine (1), an adjustable cross-section adjusting device (8, 9) in the exhaust system (4) upstream of the exhaust emission control device (10) for regulating the flow cross-section in the exhaust system (4), and at least one flow control valve (11) assigned to a cylinder (12) of the internal combustion engine (1), the flow control valve (11) being switched to a choked position which reduces the flow cross-section during engine-braking,
**characterised in that**
in the event that a characteristic value (T_{Kat}) correlating with the exhaust gas temperature exceeds a threshold value (T_{Grenz}) the cross-section adjusting device (8, 9) is opened momentarily and then returned to the choked position.

2. A process in accordance with claim 1,
**characterised in that**
the characteristic value taken into account is the catalytic converter intake temperature (T_{Kat}).

3. A process in accordance with claim 1 or 2,
**characterised in that**
once the characteristic value (T_{Kat}) has fallen below a threshold value (T_{Schwelle}) the cross-section adjusting device (8, 9) is returned to the choked position.

4. A process in accordance with one of claims 1 to 3,
**characterised in that**
the cross-section adjusting device (8, 9) remains open for a minimum period of time (Δtₘᵢₙ).

5. A process in accordance with one of claims 1 to 4,
**characterised in that**
once a predetermined period of time (Δtₘₐₓ) has passed the cross-section adjusting device (8, 9) is returned to the choked position.

6. A process in accordance with one of claims 1 to 5,
**characterised in that**
the cross-section adjusting device (8, 9) remains open until the vehicle speed has increased by a predetermined value (Δvₘᵢₙ).

7. A process in accordance with one of claims 1 to 6,
**characterised in that**
the flow control valve (11) remains open during the momentary opening of the cross-section adjusting device (8, 9).

8. A process in accordance with one of claims 1 to 7,
**characterised in that**
the cross-section adjusting device is an engine braking valve (9).

9. A process in accordance with one of claims 1 to 8,
**characterised in that**
an exhaust gas turbocharger (2) with an exhaust gas turbine (3) is provided in the exhaust system (4) and a compressor (5) is provided in the intake system (6).

10. A process in accordance with claim 9,
**characterised in that**
the cross-section adjusting device is of variable turbine geometry (8) in order to adjust the effective turbine inlet cross-section in the exhaust gas turbine (3), said variable turbine geometry (8) being switched to a choked position which reduces the flow cross-section during engine braking.

11. A process in accordance with one of claims 1 to 10,
**characterised in that**
the momentary opening of the cross-section adjusting device is displayed to the driver.

## Revendications

1. Procédé pour faire fonctionner un moteur à combustion interne en mode frein moteur, avec un système d'épuration de gaz d'échappement (10) dans la ligne de gaz d'échappement (4) du moteur à combustion interne (1), et un organe de réglage de section transversale (8, 9) dans la ligne de gaz d'échappement (4), en amont du système d'épuration de gaz d'échappement (10), pour la régulation de la section transversale d'écoulement dans la ligne de gaz d'échappement (4), et avec au moins une soupape d'étranglement (11) associée à un cylindre (12) du moteur à combustion interne (1), procédé d'après lequel en mode frein moteur, la soupape d'étranglement (11) est ouverte et l'organe de réglage de section transversale (8, 9) est transféré dans une position de retenue réduisant la section transversale d'écoulement,
**caractérisé en ce que** dans le cas où une grandeur caractéristique (T_{cat}) en corrélation avec la température de gaz d'échappement dépasse une valeur de seuil (Tₛₑᵤᵢₗ), l'organe de réglage de section transversale (8, 9) est momentanément ouvert pendant une courte durée et est ensuite à nouveau déplacé dans la position de retenue.

2. Procédé selon la revendication 1,
**caractérisé en ce que** l'on prend en considération en guise de grandeur caractéristique, la température d'entrée de catalyseur ou de pot catalytique (T_{cat}).

3. Procédé selon la revendication 1 ou 2,
**caractérisé en ce que** l'organe de réglage de section transversale (8, 9) est à nouveau déplacé dans la position de retenue, après abaissement de la grandeur caractéristique (T_{cat}) en-dessous d'une valeur de seuil (Tₛₑᵤᵢₗ).

4. Procédé selon l'une des revendications 1 à 3,
**caractérisé en ce que** l'organe de réglage de section transversale (8, 9) reste ouvert pour un intervalle de temps minimum (Δtₘᵢₙ).

5. Procédé selon l'une des revendications 1 à 4,
**caractérisé en ce que** l'organe de réglage de section transversale (8, 9) est à nouveau déplacé dans la position de retenue après que se soit écoulé un intervalle de temps prescrit (Δtₘₐₓ).

6. Procédé selon l'une des revendications 1 à 5,
**caractérisé en ce que** l'organe de réglage de section transversale (8, 9) reste ouvert jusqu'à ce que la vitesse de marche du véhicule ait augmenté d'une valeur prescrite (Δvₘᵢₙ).

7. Procédé selon l'une des revendications 1 à 6,
**caractérisé en ce que** la soupape d'étranglement (11) reste ouverte pendant l'ouverture momentanée de courte durée de l'organe de réglage de section transversale (8, 9).

8. Procédé selon l'une des revendications 1 à 7,
**caractérisé en ce que** l'organe de réglage de section transversale est un clapet de frein moteur (9).

9. Procédé selon l'une des revendications 1 à 8,
**caractérisé en ce qu'**il est prévu un turbocompresseur de suralimentation (2) à gaz d'échappement, qui comprend une turbine à gaz d'échappement (3) dans la ligne de gaz d'échappement (4) et un compresseur (5) dans le parcours d'aspiration (6).

10. Procédé selon la revendication 9,
**caractérisé en ce que** l'organe de réglage de section transversale est constitué par une géométrie de turbine (8) variable, pour le réglage variable de la section transversale d'entrée efficace de la turbine dans la turbine à gaz d'échappement (3), la géométrie de turbine (8) variable étant transférée, pour le mode de fonctionnement en frein moteur, dans une position de retenue réduisant la section transversale.

11. Procédé selon l'une des revendications 1 à 10,
**caractérisé en ce que** l'ouverture momentanée de courte durée de l'organe de réglage de section transversale, est indiquée au conducteur.
